# EUROPÄISCHE PATENTSCHRIFT

(11) **EP 1 584 921 B1**
(45) Veröffentlichungstag und Bekanntmachung des Hinweises auf die Patenterteilung: **12.10.2011**
(21) Anmeldenummer: 05101156.7
(22) Anmeldetag: 16.02.2005
(51) Int. Cl.: G01N 27/407, H05B 3/12, H05B 3/28

(54) **Keramisches Heizelement für Gassensoren**
Ceramic heating element for gas sensors
Elément chauffant en céramique pour capteurs de gaz

(30) Priorität: 01.04.2004 DE 102004016008
(43) Veröffentlichungstag der Anmeldung: 12.10.2005
(73) Patentinhaber: ROBERT BOSCH GMBH, 70442 Stuttgart (DE)
(72) Erfinder: Wahl, Thomas, 75172 Pforzheim (DE); Eisele, Ulrich, 70199 Stuttgart (DE); Koehler, Thomas, 70499 Stuttgart (DE); Schumann, Bernd, 71277 Rutesheim (DE); Friese, Karl-Hermann, 71229 Leonberg (DE); Sindel, Jürgen, 71665 Vaihingen/Enz (DE); Nufer, Stefan, 70569 Stuttgart (DE); Buse, Frank, 75417 Muehlacker-Enzberg (DE)

(56) Entgegenhaltungen:
- EP-A- 1 306 666
- US-A- 4 798 693
- US-A- 5 773 894
- US-A1- 2002 175 154

## Beschreibung

Die Erfindung geht von einem keramischen Heizelement und einem Verfahren zu dessen Herstellung gemäß der im Oberbegriff der unabhängigen Ansprüche definierten Art aus.

### Stand der Technik

Keramische Gassensoren auf Basis von Festelektrolyten zur Bestimmung der Konzentration von Gasen in Gasgemischen weisen mehrere Elektroden auf, wobei zur Bestimmung der Gaskonzentration die zwischen den Elektroden anliegende Potenzialdifferenz, ein zwischen den Elektroden fließender Pumpstrom oder der elektrische Widerstand des sich zwischen den Elektroden befindenden Festelektrolytmaterials herangezogen wird. Weiterhin weisen derartige Gassensoren mindestens ein keramisches Heizelement auf, da das keramische Festelektrolytmaterial der Sensoren erst bei Betriebstemperaturen von mehr als 400 °C eine ausreichende ionische Leitfähigkeit aufweist. Üblicherweise sind die keramischen Heizelemente aus zwei Isolationsschichten aufgebaut, zwischen denen sich eine elektrisch leitfähige Widerstandsleiterbahn befindet, die sich beim Anlegen einer entsprechenden Heizspannung stark erwärmt. Dabei fließen durch die Widerstandsleiterbahn betriebsbedingt vergleichsweise große Ströme. Da das Anlegen der Heizspannung in der Praxis meist pulsförmig erfolgt, besteht die Gefahr, dass die zwischen den Messelektroden des Gassensors zu bestimmende Potenzialdifferenz bzw. der entsprechende Pumpstrom durch eine Einkopplung der Heizspannung verfälscht wird. Diese Verfälschung nimmt mit steigender elektrischer Leitfähigkeit der Heizerisolationsschichten zu.

Aus der US 5,773, 894 sind keramische Isolationsschichten für Heizelemente von Gassensoren bekannt, die unter anderem zur Verminderung ihrer elektrische Leitfähigkeit Bariumoxid enthalten. Der Zusatz von Bariumoxid unterbindet wirkungsvoll die Einkopplung der Heizspannung in die elektrischen Messsignale des Gassensors. Problematisch an bariumhaltigen Isolationsschichten ist jedoch, dass im Dauerbetrieb Barium in die metallhaltige Widerstandsleiterbahn des Heizers eindiffundiert und dort mit dem Material der Widerstandsleiterbahn Mischoxide bildet. Die Bildung der Mischoxide führt zu einer Zerstörung des Materialgefüges der Widerstandsleiterbahn und somit zu einer eingeschränkten Heizleistung und ggf. zu einem Ausfall des Heizelements.

Aufgabe der vorliegenden Erfindung ist es, ein keramisches Heizelement bereitzustellen, das lediglich geringe Einkopplungen in die Messsignale des zu Grunde liegenden Gassensors zeigt und dennoch langzeitstabil ist.

Weitere Heizelemente sind aus der EP-A-1 306 666 und der US-A-4 798 693 bekannt.

### Vorteile der Erfindung

Das keramische Heizelement mit den Merkmalen des Anspruchs 1 hat den Vorteil, dass es so ausgeführt ist, dass Einkopplungen der Heizspannung in Messsignale eines entsprechenden Gassensors vermieden werden und das Materialgefüge des keramischen Heizelementes dennoch eine gute Langzeitbeständigkeit aufweist. Dies wird erreicht, indem die Widerstandsleiterbahn des Heizelementes eine Substanz enthält, die eine Reaktion von Barium mit dem oder den metallischen Anteilen der Widerstandsleiterbahn verhindert. Dabei bildet die Substanz vorteilhafterweise mit dem in die Widerstandsleiterbahn eindiffundierenden Barium eine chemische stabile Verbindung, wie beispielsweise ein entsprechendes Mischoxid, wodurch eine Reaktion von Bariumoxid mit dem oder den metallischen Anteilen der Widerstandsleiterbahn unter Bildung von binären Mischoxiden verhindert wird.

Weitere vorteilhafte Ausführungsformen des vorliegenden Sensors bzw. Verfahrens ergeben sich aus den Unteransprüchen.

So ist es von Vorteil, wenn die Substanz ein Metalloxid ist, wobei das Metalloxid mit Barium ein Mischoxid bildet. Die dabei entstehenden binären oder ternären Metalloxide stellen besonders stabile chemische Verbindungen dar; somit wird eindiffundierendes Barium besonders effektiv gebunden. Dies gilt insbesondere dann, wenn dabei ein binäres oder ternäres Mischoxid entsteht, das stabiler ist als ein Mischoxid gebildet aus Bariumoxid und metallischen Anteilen der Widerstandsleiterbahn.

Weiterhin ist es von Vorteil, wenn die Substanz ein Titanoxid, Zirconiumdioxid, Hafniumdioxid oder Siliciumdioxid ist, da diese besonders stabile Mischoxide mit Barium bilden. Weiterhin sind auch Tantalpentoxid oder Niobiumpentoxid als Substanz geeignet.

Bei einer besonders vorteilhaften Ausführungsform des keramischen Heizelementes ist die Substanz in der Widerstandsleiterbahn in einer Konzentration von 100 bis 50000 ppm bezogen auf den Gehalt an Titan, Zirconium, Hafnium, Silicium, Tantal bzw. Niobium enthalten.

### Zeichnung

Ein Ausführungsbeispiel des erfindungsgemäßen keramischen Heizelementes ist in der Zeichnung schematisch vereinfacht dargestellt und wird in der nachfolgenden Beschreibung näher erläutert. Dabei zeigt Figur 1 einen vertikalen Längsschnitt durch ein keramisches Heizelement gemäß einem Ausführungsbeispiel, die Figuren 2 und 3 zeigen die thermodynamische Stabilität verschiedener Bariummischoxide bei 1200 Kelvin in Abhängigkeit ihrer Zusammensetzung in Diagrammform und die Figuren 4 bis 6 zeigen Phasendiagramme entsprechender Bariummischoxide.

### Beschreibung des Ausführungsbeispiels

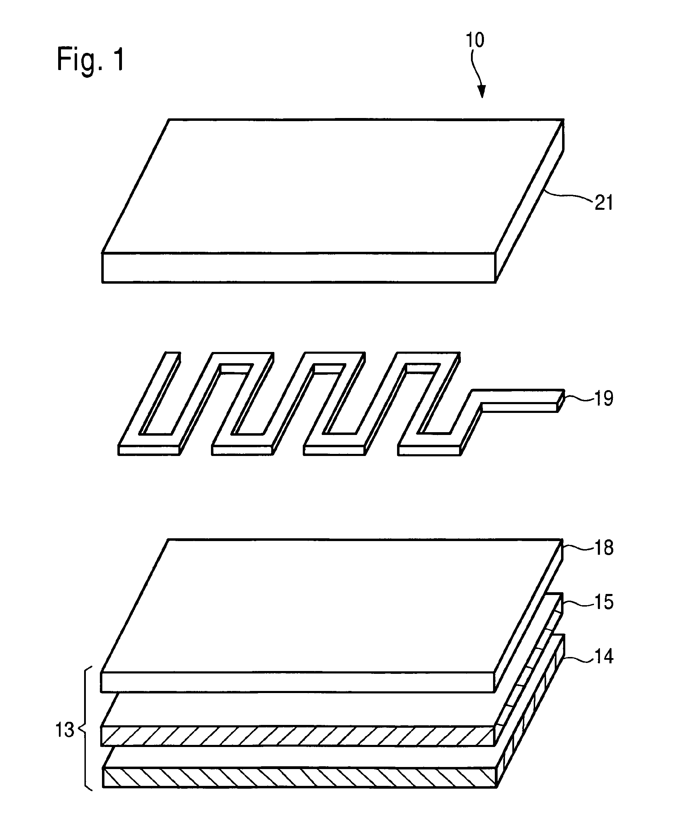

In Figur 1 ist ein prinzipieller Aufbau einer ersten Ausführungsform der vorliegenden Erfindung dargestellt. Mit 10 ist ein keramisches Heizelement beispielsweise eines elektrochemischen Gassensors bezeichnet. Das keramische Heizelement 10 weist vorzugsweise eine erste elektrisch isolierende keramische Schicht 21 auf, die beispielsweise aus einem bariumhaltigen Aluminiumoxid ausgeführt sind. Das keramische Heizelement 10 weist darüber hinaus eine weitere Isolationsschicht 13 auf, die neben der isolierenden Schicht 18 zwei weitere keramische Schichten 14, 15 umfasst. Die isolierende Schicht 18 ist beispielsweise ebenfalls aus einem bariumhaltigen Aluminiumoxid ausgeführt. Die weiteren keramischen Schichten 14, 15 sind lediglich optional vorgesehen, um ggf. mechanische oder keramische Spannungen abzufangen, die auftreten können, wenn das keramische Heizelement 10 in ein entsprechendes Sensorelement integriert wird und sich an die Abfolge der Schichten 18, 15, 14 beispielsweise keramische Festelektrolytschichten eines Sensorelements anschließen.

Die weiteren Schichten 14, 15 sind vorzugsweise aus einer Mischung des keramischen Materials, aus dem die isolierende Schicht 18 bzw. die Isolationsschicht 21 besteht und dem keramischen Material der Festelektrolytschichten eines Sensorelements ausgeführt. Dabei können die keramischen Schichten 14, 15 eine ähnliche Zusammensetzung aufweisen. Sie beinhaltenden beispielsweise das keramische Material der isolierenden Schicht 18 und das Festelektrolytmaterial in einem Verhältnis von 1:1. Eine weitere Möglichkeit besteht darin, die weitere Schicht 15 überwiegend aus dem keramischen Material der isolierenden Schicht 18 auszuführen und die weitere Schicht 14 aus einem Material mit einem höheren Anteil an Festelektrolytmaterial. So kann beispielsweise die weitere Schicht 15 das Material der isolierenden Schicht 18 in einem Verhältnis zum Festelektrolytanteil von 70 : 30 enthalten und die weitere Schicht 14 das Material der isolierenden Schicht 18 in einem Verhältnis zum Festelektrolytanteil von 30 : 70.

Das keramische Heizelement 10 umfasst weiterhin eine elektrisch leitfähige, metallhaltige Widerstandsleiterbahn 19, die der Aufheizung des keramischen Heizelementes 10 dient. Die Widerstandsleiterbahn 19 ist vorzugsweise in Form eines Mäanders ausgeführt und weist an beiden Enden nicht dargestellte elektrische Anschlüsse auf. Durch Anlegen einer entsprechenden Heizspannung an die Anschlüsse der Widerstandsleiterbahn 19 kann die Heizleistung des Heizelementes 10 entsprechend reguliert werden.

Als Material der Widerstandsleiterbahn 19 wird insbesondere eine Mischung eines Metalls, wie beispielsweise Platin, mit keramischen Anteilen, wie beispielsweise Aluminiumoxid, verwendet. Bei der Herstellung des keramischen Heizelementes 10 wird das Material der Widerstandsleiterbahn 19 als sogenanntes Cermet bereitgestellt und als Druckpaste eingesetzt. Die integrierte Form des planaren keramischen Heizelementes 10 wird durch Zusammenlaminieren der mit Funktionsschichten bedruckten keramischen Folien und anschließendem Sintern der laminierten Struktur in an sich bekannter Weise hergestellt.

Die Isolationsschicht 21 bzw. die isolierende Schicht 18, die die Widerstandsleiterbahn 19 umgibt, enthält zur Verminderung ihrer elektrischen Leitfähigkeit einen Anteil von 1 bis 20 Gew.% an Bariumoxid, vorzugsweise 5 bis 10 Gew.%. Bei höheren Temperaturen, wie sie beispielsweise im Betrieb des Heizelementes 10 auftreten können, kommt es zu einer Migration des Bariums in benachbarte keramische Schichten sowie in das Material der Widerstandsleiterbahn 19. Bereits bei Temperaturen von weniger als 1200 K kommt es dort zur Reaktion von Bariumoxid mit den metallischen Anteilen der Widerstandsleiterbahn 19, insbesondere mit Platin. Die sich dabei bildenden Bariumplatinate führen zu einer Störung des Materialgefüges der Widerstandsleiterbahn 19 und somit zu einer Einschränkung der Heizleistung des Heizelementes 10 und ggf. zu dessen Ausfall.

Zwar enthält die Widerstandsleiterbahn 19 neben einem metallischen Anteil in Form von Platin auch Aluminiumoxid, das seinerseits stabile Mischoxide mit Barium bildet. Die Mischoxide weisen prinzipiell bei hohen Temperaturen eine ausreichende thermodynamische Stabilität auf, sodass eine Weiterreaktion mit dem Platin der Widerstandsleiterbahn 19 eigentlich ausgeschlossen ist. Faktisch ist der Aluminiumoxidanteil der Widerstandsleiterbahn 19 jedoch nicht ausreichend, um eindiffundierendes Barium vollständig oder zumindest weitgehend abzufangen. Aus diesem Grund enthält die Widerstandsleiterbahn 19 eine weitere Substanz, die mit Barium oder Bariumoxid eine chemische Verbindung bildet, wobei die sich bildende chemische Verbindung eine höhere thermodynamische Stabilität aufweist als diejenigen Mischoxide, die sich aus den metallischen Anteilen der Widerstandsleiterbahn 19 mit Bariumoxid bilden können.

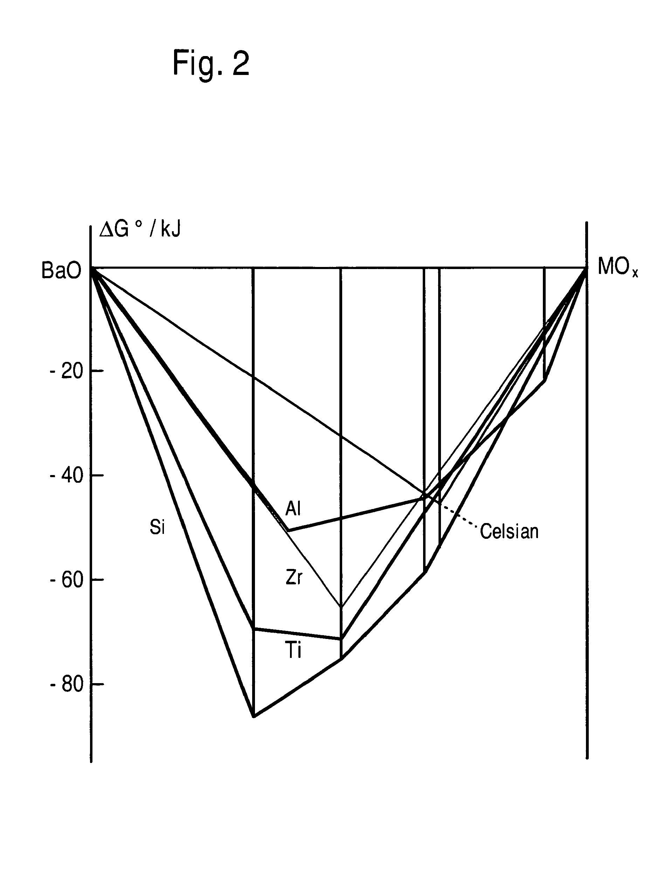

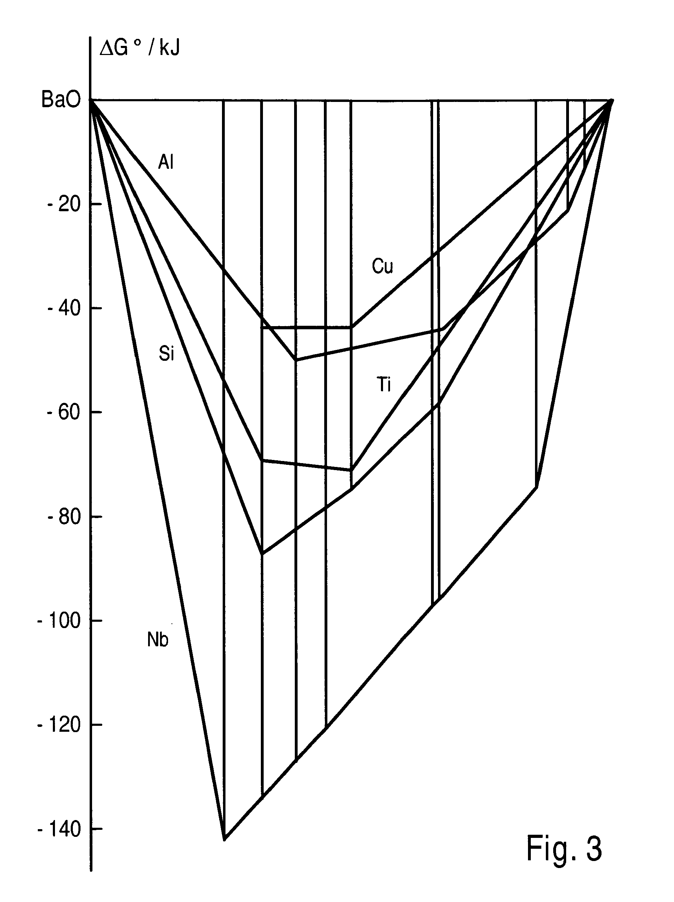

In Figur 2 und 3 sind beispielhaft die thermodynamischen Stabilitäten einiger Mischoxide von Bariumoxid mit Elementen der vierten oder fünften Haupt- bzw. Nebengruppe in Abhängigkeit ihrer Mischungsverhältnisse bei 1200 K angegeben. Hierbei wird ersichtlich, dass insbesondere Mischoxide mit Silicium, Titan, Niobium oder Zirconium geeignet sind. Darüber hinaus haben sich auch die höheren Homologen des Zirconiums und Niobiums, Hafnium und Tantal, sowie weitere saure Oxide als geeignet erwiesen.

So ist vorzugsweise der Zusatz von 100 bis 10000 ppm, insbesondere von 200 bis 1000 ppm, an Zirconiumdioxid oder Hafniumdioxid bzw. Mischungen derselben, bezogen auf den Gehalt an Zirconium bzw. Hafnium, zum Material der Widerstandsleiterbahn 19 vorgesehen. Weiterhin oder alternativ kann die Widerstandsleiterbahn 19 Tantalpentoxid oder Niobiumpentoxid in einer Konzentration von 100 bis 50000 ppm, insbesondere von 2000 bis 7000 ppm, bezogen auf den Gehalt an Niobium bzw. Tantal, aufweisen. Ein dritte Möglichkeit besteht in der Zugabe von 100 bis 10000 ppm, insbesondere von 300 bis 2000 ppm, eines Titanoxids oder von Siliciumdioxid, bezogen auf den Gehalt an Titan bzw. Silicium.

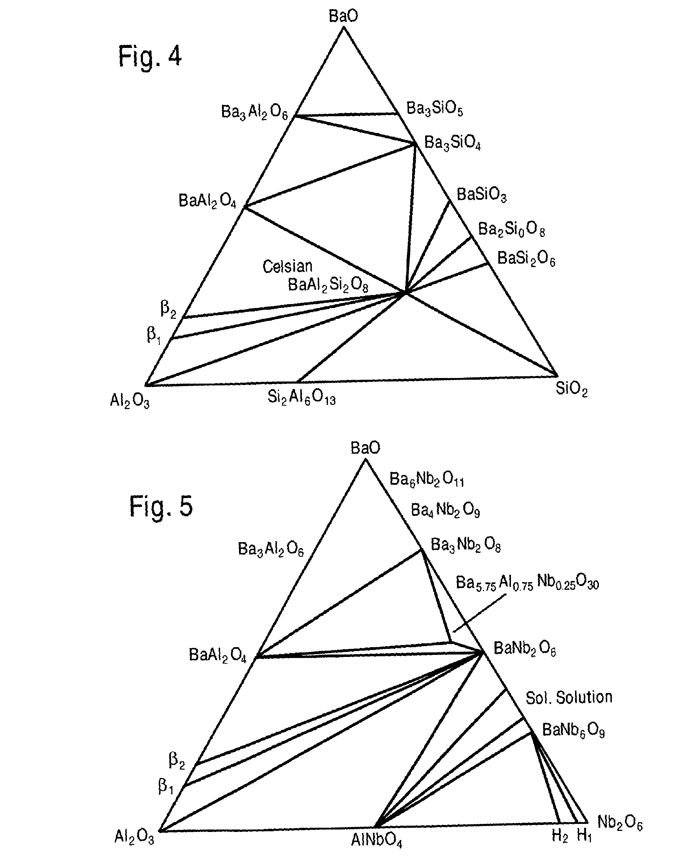

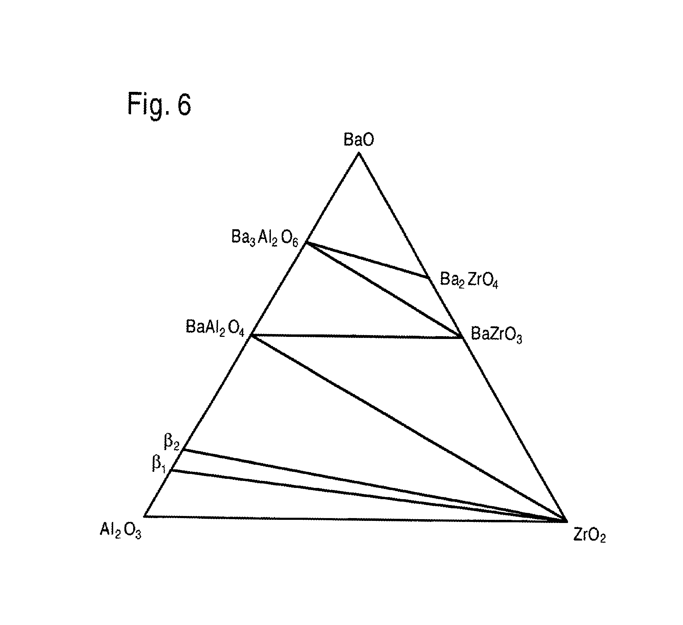

Wie aus dem in Figur 4 abgebildeten Phasendiagramm ersichtlich wird, bildet Bariumoxid in Gegenwart von Aluminiumoxid und Siliciumdioxid als ternäre Phase Celsian. Diese Reaktion verläuft über die Bildung von Mullit und ist kinetisch gehemmt. Wird anstatt Siliciumdioxid als Substanz zum Abfangen von Barium Niobiumpentoxid eingesetzt, wird die Bildung einer ternäre Phase umgangen, es bildet sich jedoch weiterhin in einem Zwischenschritt eine binäre Phase AlNbO₄. Die ist dem in Figur 5 dargestellten Phasendiagramm zu entnehmen. Ein weiteres Phasendiagramm ist in Figur 6 abgebildet. Es zeigt, dass die Reaktion von Zirconiumdioxid mit Bariumoxid ohne Bildung einer Zwischenstufe verläuft.

Im weiteren sind exemplarisch Versuchsergebnisse aufgeführt, die die Wirksamkeit des Zusatzes einer Substanz zum Abfangen von Barium zum Material der Widerstandleiterbahn eines Heizelementes belegen.

Dabei ist für jede der Proben die Zunahme des elektrischen Widerstands der Widerstandleiterbahn bei Betriebstemperatur in Abhängigkeit von der Anzahl an gefahrenen Betriebszyklen aufgetragen. Die Abkürzung "def." steht für den Ausfall des Heizelementes. Jeder Betriebszyklus umfasst das Anlegen einer Heizspannung von 14.2 V für 9 Sekunden. Die Proben 1 und 2 beinhalten Widerstandleiterbahnen aus herkömmlichem Material, die Proben 3 bis 5 sind mit 2 Gew.% Nb₂O₅ dotiert. Alle Proben weisen als Heizerisolation bariumhaltige Keramiken auf.

| | Probe 1 | Probe 2 | Probe 3 | Probe 4 | Probe 5 |
|---|---|---|---|---|---|
| 0 - 8500 Zyklen | 4.55 | 4.25 | 0.95 | 1.43 | 1.10 |
| 0 - 23000 Zyklen | def. | Def. | 0.66 | 0.55 | 0.52 |
| 0 - 37800 Zyklen | def. | Def. | 1.51 | 2.01 | 1.47 |
| 0 - 48500 Zyklen | def. | Def. | 2.28 | 4.13 | 2.64 |
| 0 - 60000 Zyklen | def. | Def. | def. | def. | def. |

In einer weiteren Zusammenstellung ist die Zunahme des elektrischen Widerstands von zirconiumhaltigen Widerstandleiterbahnen bei Betriebstemperatur in Abhängigkeit von der Anzahl an gefahrenen Betriebszyklen aufgetragen. Jeder Betriebszyklus umfasst das Anlegen einer Heizspannung von 15.2 V für 9 Sekunden. Die Proben 1 bis 3 weisen Widerstandleiterbahnen aus herkömmlichem Material auf, die Proben 4 bis 6 sind mit 0.5 Gew.% ZrO₂ dotiert. Alle Proben beinhalten als Heizerisolation bariumhaltige Keramiken.

| | Probe 1 | Probe 2 | Probe 3 | Probe 4 | Probe 5 | Probe 6 |
|---|---|---|---|---|---|---|
| 0 - 14614 Zyklen | 2.26 | 1.86 | 1.74 | 0.09 | 0.14 | -0.13 |
| 0 - 29244 Zyklen | 6.17 | 5.81 | 5.11 | 0.97 | 0.87 | 0.41 |
| 0 - 41960 Zyklen | def. | 7.69 | Def. | 1.25 | 1.32 | 0.84 |
| 0 - 52600 Zyklen | def. | def. | Def | 2.48 | 2.62 | 2.22 |
| 0 - 67200 Zyklen | def. | def. | Def. | def. | def. | def. |

In einer dritten Zusammenstellung ist die Zunahme des elektrischen Widerstands von siliciumdioxidhaltigen Widerstandleiterbahnen bei Betriebstemperatur in Abhängigkeit von der Anzahl an gefahrenen Betriebszyklen aufgetragen. Jeder Betriebszyklus umfasst das Anlegen einer Heizspannung von 14.0 V für 9 Sekunden. Die Proben 1 bis 3 beinhalten Widerstandleiterbahnen aus herkömmlichem Material, die Proben 4 bis 6 sind mit 0.5 Gew.% ZrO₂ dotiert. Alle Proben weisen als Heizerisolation bariumhaltige Keramiken auf.

| | Probe 1 | Probe 2 | Probe 3 | Probe 4 | Probe 5 | Probe 6 |
|---|---|---|---|---|---|---|
| 0 - 10600 Zyklen | 1.28 | 2.11 | 2.42 | 1.45 | 0.84 | 0.86 |
| 0 - 34600 Zyklen | 12.96 | def. | def. | 4.47 | 4.57 | 3.47 |
| 0 - 42250 Zyklen | def. | def. | def. | 6.54 | 7.80 | 6.04 |
| 0 - 57500 Zyklen | def. | def. | def. | def. | def. | def. |

## Patentansprüche

1. Keramisches Heizelement für Sensoren zur Detektion eines Gases in Gasgemischen mit mindestens einer metallhaltigen Widerstandsleiterbahn (19) und mit mindestens einer bariumoxidhaltigen Isolationsschicht (13, 21), **dadurch gekennzeichnet, dass** die metallische Widerstandsleiterbahn (19) zusätzlich ein Titanoxid, Hafniumdioxid, Siliziumdioxid, Tantalpentoxid oder Niobiumpentoxid als Substanz enthält, die eine Reaktion von Barium mit dem oder den metallischen Anteilen der Widerstandsleiterbahn (19) verhindert.

2. Keramisches Heizelement nach Anspruch 1, **dadurch gekennzeichnet, dass** die Substanz in der Widerstandsleiterbahn (19) in einer Konzentration von 100 bis 10000 ppm bezogen auf den Gehalt an Titan, Zirconium, Hafnium bzw. Silicium enthalten ist.

3. Keramisches Heizelement nach Anspruch 1, **dadurch gekennzeichnet, dass** die Substanz in der Widerstandsleiterbahn (19) in einer Konzentration von 100 bis 50000 ppm bezogen auf den Gehalt an Tantal bzw. Niobium enthalten ist.

4. Keramisches Heizelement nach einem der vorhergehenden Ansprüche, **dadurch gekennzeichnet, dass** der metallische Anteil der Widerstandsleiterbahn (19) Platin ist.

5. Keramisches Heizelement nach einem der vorhergehenden Ansprüche, **dadurch gekennzeichnet, dass** die Widerstandsleiterbahn (19) weiterhin Aluminiumoxid enthält.

6. Verfahren zur Herstellung eines keramischen Heizelements mit mindestens einer metallhaltigen Widerstandsleiterbahn (19) und mit mindestens einer bariumoxidhaltigen Isolationsschicht (13, 21), wobei in einem ersten Schritt eine keramische Druckpaste erzeugt wird, die einen metallischen Anteil, einen keramischen Anteil und ein Titanoxid, Hafniumdioxid, Siliziumdioxid, Tantalpentoxid oder Niobiumpentoxid als Substanz enthält, die eine Reaktion von Barium mit dem metallischen Anteil der Widerstandsleiterbahn verhindert, und wobei in einem zweiten Schritt auf die Isolationsschicht (13, 21) mittels der keramischen Druckpaste eine Widerstandsleiterbahn (19) gedruckt wird.

## Claims

1. Ceramic heating element for sensors for detecting a gas in gas mixtures, comprising at least one metal-containing resistance conductor track (19) and comprising at least one insulating layer (13, 21) which contains barium oxide, **characterized in that** the metallic resistance conductor track (19) additionally contains a titanium oxide, hafnium dioxide, silicon dioxide, tantalum pentoxide or niobium pentoxide as a substance which prevents barium from reacting with the metallic constituent or constituents of the resistance conductor track (19).

2. Ceramic heating element according to Claim 1, **characterized in that** the substance is present in the resistance conductor track (19) in a concentration of 100 to 10 000 ppm based on the titanium, zirconium, hafnium or silicon content.

3. Ceramic heating element according to Claim 1, **characterized in that** the substance is present in the resistance conductor track (19) in a concentration of 100 to 50 000 ppm based on the tantalum or niobium content.

4. Ceramic heating element according to one of the preceding claims, **characterized in that** the metallic constituent of the resistance conductor track (19) is platinum.

5. Ceramic heating element according to one of the preceding claims, **characterized in that** the resistance conductor track (19) further contains aluminium oxide.

6. Process for producing a ceramic heating element comprising at least one metal-containing resistance conductor track (19) and comprising at least one insulating layer (13, 21) which contains barium oxide, wherein, in a first step, a ceramic printing paste is produced, containing a metallic constituent, a ceramic constituent and a titanium oxide, hafnium dioxide, silicon dioxide, tantalum pentoxide or niobium pentoxide as a substance which prevents barium from reacting with the metallic constituent of the resistance conductor track, and wherein, in a second step, a resistance conductor track (19) is printed onto the insulating layer (13, 21) by means of the ceramic printing paste.

## Revendications

1. Elément chauffant en céramique pour capteurs destinés à détecter un gaz dans des mélanges de gaz, comprenant au moins une piste conductrice à résistance (19) contenant du métal, et comprenant au moins une couche isolante (13, 21) contenant de l'oxyde de baryum, **caractérisé en ce que** la piste conductrice à résistance métallique (19) contient en outre un oxyde de titane, un dioxyde d'hafnium, un dioxyde de silicium, un pentoxyde de tantale, ou un pentoxyde de niobium en tant que substance qui empêche une réaction du baryum avec la ou les proportions métalliques de la piste conductrice à résistance (19).

2. Elément chauffant en céramique selon la revendication 1, **caractérisé en ce que** la substance est contenue dans la piste conductrice à résistance (19) dans une concentration de 100 à 10 000 ppm par rapport à la teneur en titane, zirconium, hafnium ou silicium.

3. Elément chauffant en céramique selon la revendication 1, **caractérisé en ce que** la substance est contenue dans la piste conductrice à résistance (19) dans une concentration de 100 à 50 000 ppm par rapport à la teneur en tantale ou en niobium.

4. Elément chauffant en céramique selon l'une quelconque des revendications précédentes, **caractérisé en ce que** la proportion métallique de la piste conductrice à résistance (19) est du platine.

5. Elément chauffant en céramique selon l'une quelconque des revendications précédentes, **caractérisé en ce que** la piste conductrice à résistance (19) contient en outre de l'oxyde d'aluminium.

6. Procédé de fabrication d'un élément chauffant en céramique comprenant au moins une piste conductrice à résistance (19) contenant du métal, et comprenant au moins une couche isolante (13, 21) contenant de l'oxyde de baryum, dans lequel, dans une première étape, une pâte d'impression céramique est produite, laquelle contient une proportion métallique, une proportion céramique et un oxyde de titane, un dioxyde d'hafnium, un dioxyde de silicium, un pentoxyde de tantale, ou un pentoxyde de niobium en tant que substance qui empêche une réaction du baryum avec la proportion métallique de la piste conductrice à résistance, et dans lequel, dans une deuxième étape, on imprime une piste conductrice à résistance (19) sur la couche isolante (13, 21) au moyen de la pâte d'impression céramique.
